# FASCICULE DE BREVET EUROPEEN

(11) **EP 0 531 659 B1**
(45) Date de publication et mention de la délivrance du brevet: **28.10.1998**
(21) Numéro de dépôt: 92111884.0
(22) Date de dépôt: 13.07.1992
(51) Int. Cl.: H01M 6/50, H01M 10/50

(54) **Générateur électrochimique de forte énergie massique spécifique**
Elektrochemischer Generator mit hoher spezifischer Energie
Electrochemical generator with high energy density

(30) Priorité: 15.07.1991 FR 9108888
(43) Date de publication de la demande: 17.03.1993
(73) Titulaire: ALCATEL ALSTHOM COMPAGNIE GENERALE D'ELECTRICITE, 75008 Paris (FR)
(72) Inventeur: Firmin, Jean-Luc, F-86000 Poitiers (FR); Alexandre, Alain, c/o SAFT, F-86000 Poitiers Cedex (FR)
(74) Mandataire: Laroche, Danièle

(56) Documents cités:
- EP-A- 43 634
- EP-A- 271 086
- DE-A- 2 047 787
- GB-A- 2 134 698
- US-A- 3 865 630
- US-A- 4 189 527
- PATENT ABSTRACTS OF JAPAN vol. 015, no. 318 (M-1146)14 Août 1991
- PATENT ABSTRACTS OF JAPAN vol. 015, no. 264 (M-1132)4 Juillet 1991
- PATENT ABSTRACTS OF JAPAN vol. 7, no. 288 (E-218)(1433) 22 Décembre 1983

## Description

La présente invention concerne un générateur électrochimique de forte énergie massique spécifique, tel que par exemple une pile au lithium susceptible de délivrer une énergie massique de 200 à 400 Wh/kg.

Au cours de la décharge d'un tel générateur, en particulier aux fortes densités de courant, une fraction de l'énergie est transformée en chaleur. Une partie des calories est évacuée par conduction, du coeur des électrodes vers la structure externe du générateur, puis par rayonnnement ou par conduction lorsqu'il existe une liaison thermique suffisante entre le générateur et son support. Mais la majeure partie des calories est emmagasinée dans le générateur dont la température s'élève.

Pour la plupart des générateurs traditionnels, une telle élévation de température n'est pas gênante.

Ainsi une pile argent-zinc pouvant délivrer une énergie massique spécifique de 100 Wh/kg est, dans le cas d'une décharge adiabatique, susceptible de subir une élévation de température maximale de 90°C. Mais, comme la température maximale admissible en fin de décharge pour une telle pile est de l'ordre de 120°C, la pile pourra être déchargée de manière adiabatique sans problème majeur de sécurité, et il n'est donc pas nécessaire de prévoir de dispositif spécial pour l'évacuation des calories.

Dans le cas d'une pile à l'eau de mer, chlorure d'argent - magnésium, délivrant une énergie massique spécifique du même ordre qu'une pile argent-zinc, une circulation d'eau de mer est nécessaire pour assurer un fonctionnement satisfaisant.

Pour une pile au lithium capable de délivrer une énergie massique pouvant atteindre 200 à 400 Wh/kg, une décharge adiabatique conduirait à une élévation de température prohibitive (par exemple 180°C pour une pile délivrant 250 Wh/kg) ; ceci signifierait la fusion du lithium et l'explosion de la pile avant la fin de la décharge. Comme une telle pile doit obligatoirement rester hermétiquement fermée pendant et après son fonctionnement, on ne peut résoudre le problème de l'évacuation des calories qu'en associant à la pile des moyens d'échange thermique.

Une solution a déjà été proposée dans le brevet européen EP-A 0230 901 ; l'électrolyte de la pile circule dans les couples électrochimiques, puis dans un échangeur thermique extérieur. Cette solution est bien adaptée à certains types de piles de grandes dimensions, mais elle ne peut s'appliquer aisément à une pile de faible encombrement, ou à une pile à éléments séparés utilisée notamment pour l'alimentation des véhicules spatiaux.

Pour ce dernier type de pile, il a déjà été prévu d'établir un contact thermique satisfaisant par l'intermédiaire d'une membrane mince entre chaque élément de la pile associée à une gaine conductrice thermique en aluminium reliée à une plaque froide jouant le rôle d'échangeur thermique. Une telle disposition convient bien pour des décharges à des régimes moyens de l'ordre de quelques heures ; par contre, pour des applications nécessitant des décharges plus rapides, elle est insuffisante en raison des gradients thermiques qui apparaissent d'une part au sein même de chaque élément, et d'autre part dans les conducteurs thermiques reliant les éléments à la plaque froide.

Le brevet DE-2 047 787 décrit une batterie comportant un tube, contenant un fluide caloporteur qui est de l'eau, plongeant dans l'électrolyte à l'extérieur du faisceau électrochimique et relié à un dissipateur exterieur.

On connaît aussi par le brevet US-4,189,527 un dispositif constitué d'un tube ouvert traversant le faisceau électrochimique et relié à un radiateur extérieur.

Un système d'évacuation de la chaleur d'une batterie est aussi connu de US-A-3 865 630.

La présente invention a pour but de proposer une structure de générateur électrochimique de forte énergie massique spécifique permettant l'évacuation des calories générées au cours de décharges rapides.

La présente invention a pour objet un générateur électrochimique de forte énergie massique spécifique au lithium-chlorure de thionyle, comprenant dans un boîtier (2) fermé par un couvercle (3), un empilement (10) d'électrodes positives et négatives traversé par deux bornes métalliques (4 et 5) reliées respectivement auxdites électrodes positives (22) et négatives (21), et émergeant dudit couvercle, caractérisé par le fait que l'une desdites bornes (24) a la forme d'un tube (30) dont la face interne est tapissée d'une structure capillaire, fermé hermétiquement et rempli d'un fluide caloporteur qui est le Fréon 11 de formule CFCl₃, traversant le fond (7) dudit boîtier (2) pour être en contact avec un moyen refroidisseur (33), ladite borne (24) constituant ainsi un caloduc pour ledit générateur, et par le fait que les électrodes ayant la polarité de ladite borne-caloduc (24) comprennent des collecteurs de courant métalliques (26) individuellement liés électriquement et thermiquement à la face externe dudit tube (30) pour recueillir les calories sur toute la surface réactive desdites électrodes et les acheminer jusqu'audit caloduc.

La face externe dudit tube porte au moins une ailette métallique sur laquelle est soudée une entretoise qui est en contact thermique et électrique avec le collecteur métallique de chacune desdites électrodes d'une même polarité. Les collecteurs de courant métalliques des électrodes reliés à la borne-caloduc jouent le rôle d'ailettes pour recueillir les calories sur toute la surface réactive des électrodes et les acheminer jusqu'au caloduc.

De préférence la borne-caloduc se trouve en position centrale dans le générateur. Elle peut être la borne positive ou la borne négative. Dans une pile au lithium-chlorure de thionyle, elle est avantageusement la borne négative en nickel connectée aux feuillards de nickel des électrodes de lithium.

Ladite structure capillaire est une structure formée par une toile fixée sur la face interne dudit tube.

Selon d'autres variantes de mise en oeuvre utilisées de préférence lorsque le générateur est susceptible de fonctionner en apesanteur, la face interne dudit tube est usinée suivant des rainures capillaires parallèles à l'axe dudit tube. Cette section transversale peut être sensiblement circulaire ou sensiblement rectangulaire.

La structure capillaire dudit tube constitue une pompe à liquide. Le fluide caloporteur s'évapore dans la zone chauffée du générateur. La vapeur s'écoule dans le tube vers son extrémité froide au niveau du fond du générateur pour se condenser en cédant sa chaleur latente. Le condensat retourne vers le centre du générateur dans la structure capillaire par un phénomène que l'on appelle "pompage capillaire".

L'écoulement du liquide et celui de la vapeur sont provoqués par une variation de pression dans les phases vapeur et liquide ; cette variation est généralement très faible, et par conséquent la température est quasiment constante le long du caloduc : on aboutit à une isothermicité.

Les électrodes positives du générateur selon l'invention ont un support en carbone, les électrodes négatives sont formées d'un feuillard de nickel laminé entre deux feuilles de lithium, le solvant de l'électrolyte qui sert également de cathode est à base de chlorure de thionyle, et ledit tube constituant le caloduc est en nickel et solidaire des feuillards de nickel des électrodes négatives.

La structure de caloduc intégrée conformément à la présente invention est particulièrement bien adaptée pour les générateurs à applications spatiales, car elle est plus efficace et plus légère que les dispositifs antérieurs, et son fonctionnement n'est pratiquement pas modifié en présence de fortes accélérations ou en apesanteur.

Dans le dessin annexé :
- La figure 1 est une vue extérieure très schématique d'une pile selon l'invention.
- La figure 2 est une vue en coupe selon la ligne II-II de la figure 1.
- La figure 3 montre en perspective agrandie une liaison entre une borne-caloduc d'une pile selon l'invention et une électrode de même polarité.
- La figure 4 montre un détail de la borne-caloduc de la figure 3.
- La figure 5 comporte des courbes illustrant des performances d'une pile de l'art antérieur.
- La figure 6 comporte des courbes analogues à celles de la figure 5, niais par une pile selon l'invention.

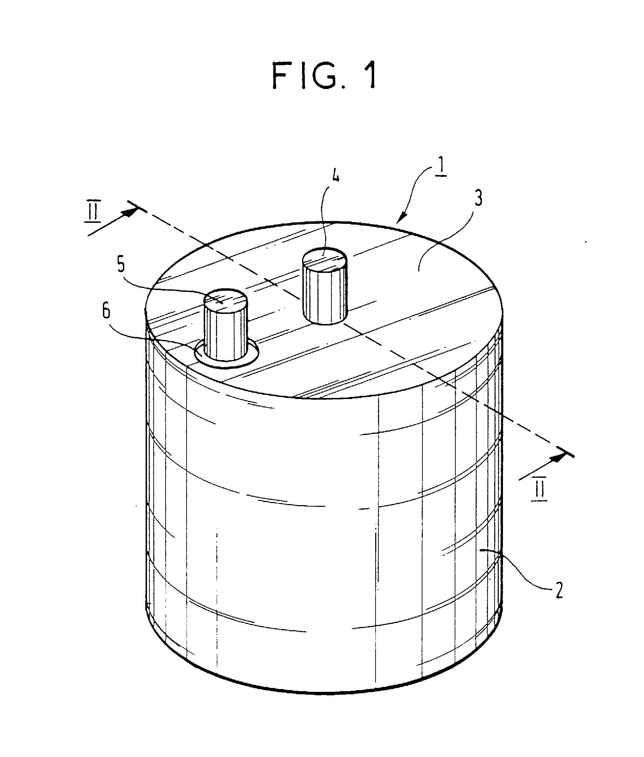

On voit dans la figure 1 une pile 1 au lithium - chlorure de thionyle selon l'invention, avec son boîtier métallique 2 fermé par un couvercle métallique 3, sa borne négative 4 et sa borne positive 5 émergeant du couvercle 3 ; un joint de verre 6 est prévu entre la borne 5 et le couvercle 3. Les dimensions de la pile 1 sont de 110 mm pour le diamètre et 100 mm pour la hauteur. (Ces dimensions peuvent varier dans un rapport sensiblement homothétique suivant les applications).

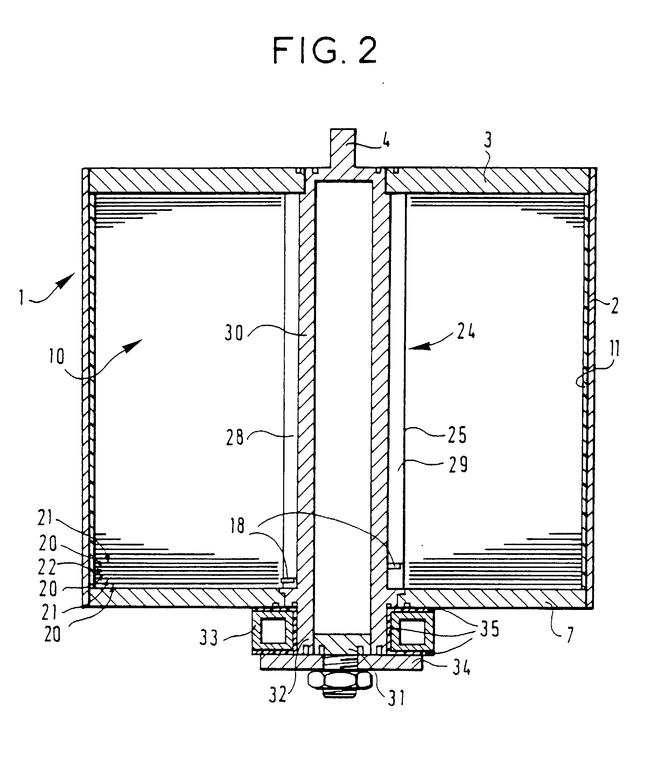

On voit plus précisément en coupe dans la figure 2 la structure de la pile 1 dont l'ensemble des couples électrochimiques forme un empilement 10, comme dans le brevet français FR-A 86 17426, reposant sur le fond 7 du boîtier 2. Une feuille isolante 11 sépare l'empilement 10 de la paroi latérale du boîtier 2.

On a représenté très schématiquement deux couples électrochimiques de l'empilement 10 avec chacun :
- une anode 21,
- un séparateur 20,
- une cathode 22.

L'anode 21 est plus précisément constituée d'un feuillard de nickel laminé entre deux feuilles de lithium ; son épaisseur totale est de 0,46 mm et son diamètre de 108 mm.

La cathode 22 est formée d'un feuillard de nickel laminé entre deux couches de carbone ; son épaisseur totale est de 0,96 mm et son diamètre de 107 mm.

L'électrolyte comprend du chlorure de thionyle et du tétrachlorure de lithium-aluminium, avec des additifs connus susceptibles de garantir les performances de la pile après stockage.

Chaque couple électrochimique est percé de deux ouvertures formant pour l'empilement 10 deux cheminées 25, pour loger les bornes positive et négative de la pile. On voit dans la figure 2, la cheminée 25 où est intégrée la borne négative 24, reliée aux anodes 21 et dont la partie supérieure 4 émerge du couvercle 3. La borne positive non illustrée est conforme à celle d'une pile de l'art antérieur, comme décrite dans le brevet français FR-A 86 17426.

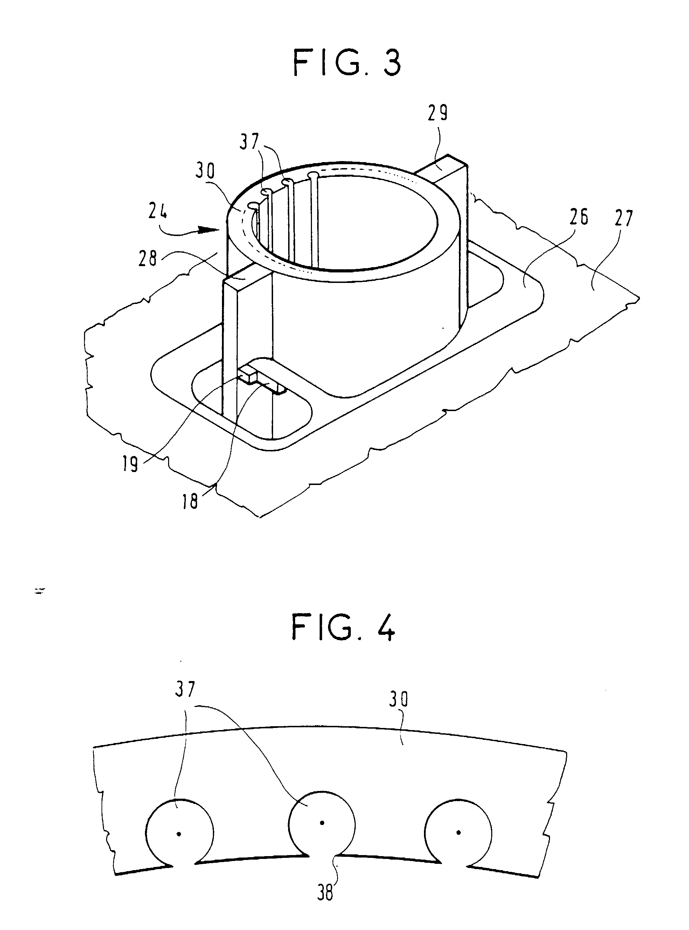

La figure 3 montre plus en détail la liaison entre la borne négative en nickel 24 selon l'invention (dont la structure interne sera décrite plus loin) et une anode 21 avec sa feuille de lithium 27 et son feuillard de nickel 26 appliqué contre une entretoise métallique 18 définissant l'intervalle entre deux couples. La borne 24 est munie de deux ailettes métalliques 28 et 29 dont une est soudée en 19 à l'entretoise 18.

Selon l'invention la borne négative 24, disposée en position centrale, est en nickel et constitue un caloduc, c'est-à-dire une enceinte thermique fermée contenant un fluide caloporteur. Elle est formée d'un tube de nickel 30 traversant de manière étanche le fond 7 et fermée à son extrémité inférieure 32 par un bouchon 31 ; l'extrémité 32 est au contact d'un refroidisseur 33 bloqué par une rondelle 34 contre le fond 7. On a référencé 35 des feuilles d'isolant électrique.

Comme cela apparaît dans la figure 4, la paroi interne du tube 30 est usinée de manière à présenter une structure rainurée capillaire. Si le diamètre intérieur du tube 30 est 17,08 mm et son épaisseur 2 mm on prévoit quarante cinq rainures cylindriques 37, centrées à 17,78 mm de l'axe du tube, de diamètre 1 mm, et communiquant avec l'intérieur du tube par une ouverture 38 de largeur 0,5 mm.

Selon d'autres variantes de mise en oeuvre le nombre des rainures capillaires cylindriques 37 varie entre quarante et soixante. Leur diamètre varie entre 0,5 et 1,5 mm et la largeur de l'ouverture 38 varie entre 0,4 et 0,6 mm.

Selon d'autres variantes de mise en oeuvre les rainures capillaires ont une section transversale rectangulaire :
- leur nombre varie entre 50 et 100,
- leur profondeur varie entre 0,6 mm et 1 mm,
- leur largeur varie entre 0,4 mm et 1 mm.

On a introduit sous-vide dans le tube 30 un fluide caloporteur, qui est de formule CFCl₃ (Fréon 11). Ce fluide est tout à fait compatible avec le nickel, le lithium et le chlorure de thionyle.

Le moyen de refroidissement 33 est formé par une plaque froide du genre de celles qui sont mises en oeuvre dans les satellites ou les lanceurs spatiaux ; il peut être également constitué d'un tube d'aluminium dans lequel circule un fluide à une température déterminée.

La pile illustrée est susceptible de délivrer une énergie spécifique de l'ordre de 400 Wh/Kg.

Le but recherché est qu'une telle pile ait une température maximale de fonctionnement de 100°C, avec une température interne la plus homogène possible, par exemple un écart maximal entre deux points de la pile compris entre 5°C et 10°C.

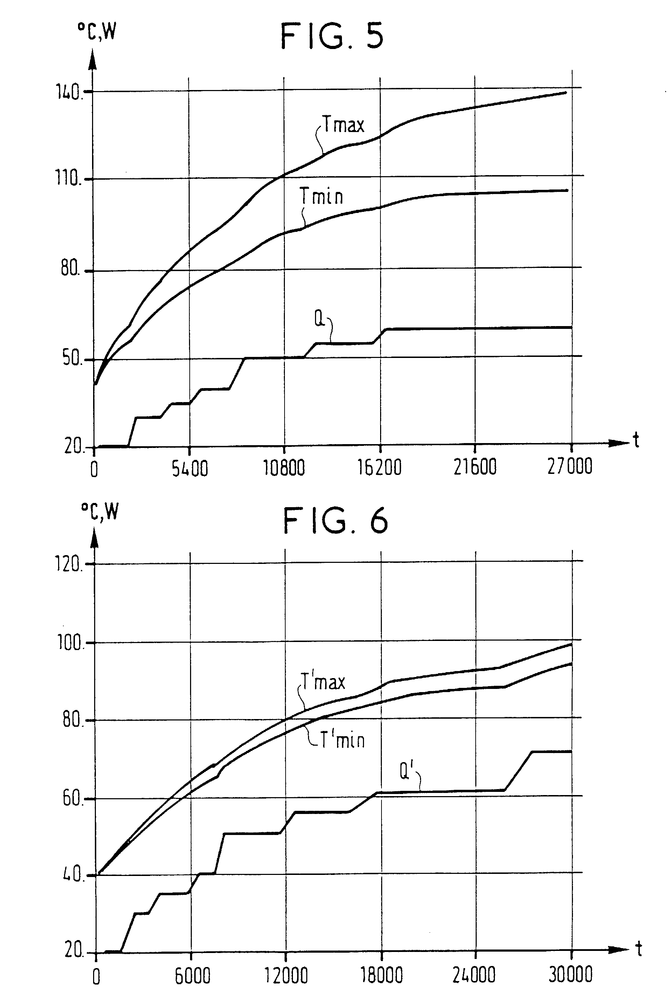

Afin de mieux mettre en évidence le progrès apporté par la présente invention, on a reporté dans la figure 5 certaines caractéristiques de fonctionnement d'une pile de l'art antérieur ayant les mêmes couples électrochimiques que la pile selon l'invention, mais refroidie par l'intermédiaire d'une membrane mince et d'une gaine conductrice thermique de 1,3 mm d'épaisseur associée à une plaque froide, comme rappelé plus haut ; on a ainsi reporté les variations en fonction du temps t (en secondes) :
- de la température minimum Tmin dans la pile (°C),
- de la température maximum Tmax dans la pile (°C),
- de la puissance thermique dégagée par la réaction électrochimique Q (Watts).

Dans la figure 6 les courbes T'min, T'max et Q', correspondent aux performances correspondantes de la pile selon l'invention.

On voit que, pour une puissance thermique de 60 watts dégagée par la réaction électrochimique, la température maximale de la pile de l'art antérieur est de 140°C, alors que celle de la pile selon l'invention est de 90°C.

On peut dire que les moyens de l'art antérieur permettent de contrôler une puissance thermique maximale de 40 watts avec un gradient minimum de 15°C, tandis que la structure selon l'invention permet de contrôler une puissance thermique maximale de 70 watts avec un gradient de température inférieur à 10°C.

## Revendications

1. Générateur électrochimique de forte énergie massique spécifique au lithium-chlorure de thionyle, comprenant dans un boîtier (2) fermé par un couvercle (3), un empilement (10) d'électrodes positives et négatives traversé par deux bornes métalliques (4 et 5) reliées respectivement auxdites électrodes positives (22) et négatives (21), et émergeant dudit couvercle, caractérisé par le fait que l'une desdites bornes (24) a la forme d'un tube (30) dont la face interne est tapissée d'une structure capillaire, fermé hermétiquement et rempli d'un fluide caloporteur qui est le Fréon 11 de formule CFCl₃, traversant le fond (7) dudit boîtier (2) pour être en contact avec un moyen refroidisseur (33), ladite borne (24) constituant ainsi un caloduc pour ledit générateur, et par le fait que les électrodes ayant la polarité de ladite borne-caloduc (24) comprennent des collecteurs de courant métalliques (26) individuellement liés électriquement et thermiquement à la face externe dudit tube (30) pour recueillir les calories sur toute la surface réactive desdites électrodes et les acheminer jusqu'audit caloduc.

2. Générateur électrochimique selon la revendication 1, caractérisé par le fait que la face externe dudit tube (30) porte au moins une ailette métallique (28) sur laquelle est soudée une entretoise (18) qui est en contact thermique et électrique avec le collecteur métallique (26) de chacune desdites électrodes d'une même polarité.

3. Générateur électrochimique selon la revendication 1, caractérisé par le fait que ladite borne (24) se trouve en position centrale.

4. Générateur électrochimique selon l'une des revendications précédentes, caractérisé par le fait que ladite structure capillaire est une structure formée par une toile fixée sur la face interne dudit tube (30).

5. Générateur électrochimique selon l'une des revendications 1 à 3, caractérisé par le fait que la face interne dudit tube (30) est usinée suivant des rainures capillaires parallèles à l'axe dudit tube.

6. Générateur électrochimique selon la revendication 5, caractérisé par le fait que la section transversale desdites rainures (37) est sensiblement circulaire.

7. Générateur électrochimique selon la revendication 5, caractérisé par le fait que la section transversale desdites rainures est sensiblement rectangulaire.

8. Générateur électrochimique selon l'une des revendications précédentes, caractérisé par le fait que les électrodes positives ont un support en carbone, que les électrodes négatives sont formées d'un feuillard de nickel laminé entre deux feuilles de lithium, que le solvant de l'électrolyte qui sert également de cathode est à base de chlorure de thionyle, et que ledit tube constituant le caloduc est en nickel et solidaire des feuillards de nickel des électrodes négatives.

## Patentansprüche

1. Elektrochemischer Lithium-Thionylchlorid-Generator mit hoher spezifischer Massenenergie, der ein mit einem Deckel (3) verschlossenes Gehäuse (2), ein Paket (10) von positiven und negativen Elektroden umfaßt, durch das zwei Metallanschlüsse (4 und 5) hindurchgehen, die mit den positiven (22) bzw. negativen (21) Elektroden verbunden sind und aus dem Deckel herauskommen, dadurch gekennzeichnet, daß einer der Anschlüsse (24) die Form einer Röhre (30) hat, deren Innenfläche mit einer Kapillarstruktur bedeckt ist, die hermetisch verschlossen und mit einem Kühlfluid gefüllt ist, das Freon 11 der Formel CFCl₃ ist, die durch den Boden (7) des Gehäuses (2) hindurchgeht, um mit einer Kühleinrichtung (33) in Kontakt zu stehen, wobei der Anschluß (24) so ein Wärmerohr für den Generator bildet, und daß die Elektroden, die die Polarität des Anschluß/Wärmerohres (24) haben, Metall-Stromkollektoren (26) umfassen, die einzeln mit der Außenseite der Röhre (30) elektrisch und thermisch verbunden sind, um die Kalorien auf der gesamten reaktiven Oberfläche der Elektroden zu erfassen und sie zum Wärmerohr zu leiten.

2. Elektrochemischer Generator nach Anspruch 1, dadurch gekennzeichnet, daß die Außenseite der Röhre (30) wenigstens eine Metallamelle (28) trägt, an die ein Zwischenstück (18) geschweißt ist, das mit dem Metallkollektor (26) jeder der Elektroden mit der gleichen Polarität in thermischem und elektrischem Kontakt steht.

3. Elektrochemischer Generator nach Anspruch 1, dadurch gekennzeichnet, daß sich der Anschluß (24) in zentraler Position befindet.

4. Elektrochemischer Generator nach einem der vorhergehenden Ansprüche, dadurch gekennzeichnet, daß die Kapillarstruktur eine Struktur ist, die von einer Lage gebildet wird, die an der Innenseite der Röhre (30) befestigt ist.

5. Elektrochemischer Generator nach einem der Ansprüche 1 bis 3, dadurch gekennzeichnet, daß die Innenseite der Röhre (30) entsprechend Kapillarrillen bearbeitet ist, die zur Achse der Röhre parallel sind.

6. Elektrochemischer Generator nach Anspruch 5, dadurch gekennzeichnet, daß der Querschnitt der Rillen (37) im wesentlichen kreisförmig ist.

7. Elektrochemischer Generator nach Anspruch 5, dadurch gekennzeichnet, daß der Querschnitt der Rillen im wesentlichen rechteckig ist.

8. Elektrochemischer Generator nach einem der vorhergehenden Ansprüche, dadurch gekennzeichnet, daß die positiven Elektroden einen Träger aus Kohlenstoff aufweisen, daß die negativen Elektroden aus einem Nickelband bestehen, das zwischen zwei Lithiumfolien laminiert ist, daß das Lösungsmittel des Elektrolyts, der auch als Kathode dient, auf Thionylchlorid basiert, und daß die Röhre, die das Wärmerohr bildet, aus Nickel besteht und mit den Nickelbändern der negativen Elektroden fest verbunden ist.

## Claims

1. A lithium and thionyl chloride electrochemical battery having high energy per unit mass, said battery comprising a stack (10) of positive and negative electrodes within a housing (2) closed by a cover (3), two metal terminals (4 and 5) connected respectively to said positive electrodes (22) and the said negative electrodes (21) passing through the stack and emerging from said cover, the battery being characterized by the fact that one of said terminals (24) is in the form of a tube (30) having an inside face lined with a capillary structure, hermetically closed, and filled with a heat-conveying fluid which is Freon 11 having the formula CFCl₃, passing through the bottom (7) of said housing (2) to be in contact with a cooling means (33), said terminal (24) thus constituting a heat pipe for said battery, and by the fact that the electrodes having the polarity of said heat pipe terminal (24) comprise metal current collectors (26) individually connected both electrically and thermally to the outside face of said tube (30) for collecting heat over the entire reactive area of said electrodes and for conveying it to said heat pipe.

2. An electrochemical battery according to claim 1, characterized by the fact that the outside face of said tube (30) carries at least one metal fin (28) on which a spacer (18) is bonded which is in thermal and electrical contact with the metal collector (26) of each of said electrodes having the same polarity.

3. An electrochemical battery according to claim 1, characterized by the fact that said terminal (24) is centrally located.

4. An electrochemical battery according to any preceding claim, characterized by the fact that said capillary structure is a structure formed by a cloth fixed to the inside face of said tube (30).

5. An electrochemical battery according to any one of claims 1 to 3, characterized by the fact that the inside face of said tube (30) is machined in the form of capillary grooves parallel to the axis of said tube.

6. An electrochemical battery according to claim 5, characterized by the fact that the cross-section of said grooves (37) is substantially circular.

7. An electrochemical battery according to claim 5, characterized by the fact that the cross-section of said grooves is substantially rectangular.

8. An electrochemical battery according to any preceding claim. characterized by the fact that the positive electrodes have a carbon support, that the negative electrodes are formed by means of a nickel foil laminated between two sheets of lithium, that the solvent of the electrolyte which also acts as the cathode is based on thionyl chloride, and that the tube constituting the heat pipe is made of nickel and is integral with the nickel foil of the negative electrodes.
